# EUROPEAN PATENT APPLICATION

(11) **EP 4 651 063 A1**
(43) Date of publication of application: **19.11.2025**
(21) Application number: 24176808.4
(22) Date of filing: 17.05.2024
(51) Int. Cl.: G06Q 30/0601, G06V 20/59

(54) **SYSTEMS AND METHODS FOR VEHICLE CONFIGURATION**

(71) Applicant: Ford Global Technologies, LLC, Dearborn, MI 48126 (US)
(72) Inventor: GUIMIL REY, Xose, Brentwood, CM14 4JZ (GB); GIMENO FERRER, Daniel, 46007 Valencia (ES)
(74) Representative: Haley Guiliano International LLP

(57) **Abstract**

A system for vehicle systems configuration based on image recognition is disclosed. The system includes an image capturing device for obtaining images of a vehicle, networking circuitry for transmitting the images to network connected storage, and a processor for comparing the obtained images with stored images of possible vehicle configurations. Based on this comparison, the system selects a configuration setting for a vehicle system and implements this setting. The system can be used in various settings, including at the factory end-of-line, at a dealership, or by the end user of the vehicle.

## Description

### FIELD OF INVENTION

The present disclosure generally pertains to the field of vehicle technology, and more specifically, but not exclusively, to systems and methods that utilize image recognition for automatic configuration of vehicle systems.

### BACKGROUND

Vehicles, particularly automobiles, are complex machines that incorporate a multitude of systems and components. These systems and components often require specific configurations. For instance, a vehicle's anti-lock braking system (ABS), speedometer, stereo system, navigation system, charger, internal lights, screen size, and load box on top of the vehicle, among others, may all require specific configurations based on the vehicle's model, year, trim line, factory options, dealer options, and extras.

Vehicle configuration is typically a manual process that requires skilled personnel. This process can be time-consuming and may occur at various stages of a vehicle's lifecycle, such as during production, at the dealer when the vehicle is new or used, or after any hardware update, e.g., while the vehicle is used by an end user. The configuration process often involves the use of specialized tools and software to adjust the settings of various vehicle systems.

Image recognition technology has been widely used in various fields, including vehicle technology. Image recognition involves the identification and detection of objects or features in a digital image or video. This process involves the use of algorithms and technologies to identify objects or features in an image or video by comparing and analyzing the patterns in the image or video with a database of patterns.

In the context of vehicles, image recognition can be used for various purposes, such as identifying the make and model of a vehicle, detecting obstacles or objects in the vehicle's path, or recognizing traffic signs or signals. However, the use of image recognition for vehicle configuration has not been widely explored.

Vehicle configurations can vary widely based on the specific equipment and options of the vehicle. These configurations can include, but are not limited to, the type of vehicle, model year, the trim line, the factory options, the dealer options, and the extras. Each of these factors can influence the configuration of various vehicle systems.

In addition, vehicles are increasingly becoming connected, with the ability to communicate with other vehicles, infrastructure, and/or networks. This connectivity can enable a range of features and capabilities, such as over-the-air (OTA) updates, which allow for the remote updating of software and systems in the vehicle.

### SUMMARY OF INVENTION

According to some aspects of the present invention, there is provided a vehicle configurator system. This system includes at least one image capturing device configured to obtain one or more images of a vehicle. The system comprises networking circuitry configured to transmit the obtained one or more images to network connected storage. This storage comprises one or more images of possible vehicle configurations, such as accessories, configurable options, and extras. The system comprises a processor configured to compare the obtained images with the stored images to identify a configuration status of the vehicle. Based on the identified configured status, the processor selects a configuration setting for a vehicle system. The networking circuitry is configured to receive the configuration setting, and configuration circuitry is configured to implement the received configuration setting on the vehicle system. For instance, the system could be used to automatically configure a vehicle's systems based on the vehicle's current status, as determined by comparing images of the vehicle with a database of possible configurations.

In some examples, the at least one image capturing device comprises one or more cameras integrated into the vehicle. This could allow the vehicle to capture images of itself for comparison with the stored images, thereby enabling the vehicle to self-configure its systems based on its current status.

In some examples, the at least one image capturing device comprises one or more cameras of a mobile user device, e.g., a smartphone, separate from the vehicle, e.g., not operationally coupled to the vehicle. This could allow a user, such as a mechanic or a vehicle owner, to capture images of the vehicle for comparison with the stored images, thereby enabling the user to configure the vehicle's systems based on the vehicle's current status. In some examples, the at least one image capturing device may be an image capturing device of a drone, e.g., an automated machine configured to capture, automatically, one or more images of the vehicle.

In some examples, the at least one image capturing device comprises one or more cameras of an external environment. For example, the at least one image capturing device may form part of an infrastructure in which the vehicle operates. In some examples, the at least one image capturing device may be an image capturing device of a home security network, an image capturing device of another vehicle, or an image capturing device of a road network. This could allow images of the vehicle to be captured in a variety of settings, such as a factory, a dealership, or a user's home, and/or a road, for comparison with the stored images, thereby enabling the vehicle's systems to be configured based on the vehicle's current status, e.g., an operational status.

In some examples, the networking circuitry is configured to implement the configuration setting via an over-the-air, OTA, update. This could allow the configuration setting to be implemented remotely, without the vehicle needing to be physically connected to a computer or other device.

In some examples, the at least one image capturing device is configured to capture images in a range of lighting conditions, such as low-light environments. This could allow the vehicle's systems to be configured based on the vehicle's current status in a variety of lighting conditions.

In some examples, the network connected storage is configured to store metadata associated with the images of possible vehicle configurations. The metadata may comprise at least one of: part number, installation date, configurable options, accessory information, vehicle model, vehicle manufacture date, vehicle identification number, optional extra information, and compatibility information. This could allow the system to identify the vehicle's current status with greater accuracy and select the appropriate configuration setting for the vehicle's systems.

In some examples, the processor is further configured to generate a report of the configuration setting and possible updates to the vehicle's systems. This could allow the system to provide feedback to a user, such as a mechanic or a vehicle owner, about the vehicle's current status and any changes that have been made to the vehicle's systems. In some examples, the report may be output, e.g., automatically, to a database. The database may be updated, e.g., periodically, based on a determined change in the configuration status of the vehicle.

In some examples, the configuration circuitry is configured to verify the successful implementation of the configuration setting, and to provide a confirmation notice. This could allow the system to confirm that the vehicle's systems have been correctly configured based on the vehicle's current status. In some examples, one or more further vehicle settings, such as a driver mode, may be implemented, e.g., activated or allowed, on the vehicle system in response to receiving the confirmation notice.

In some examples, the processor uses artificial intelligence trained on possible vehicle configurations to recognize patterns and/or differences between the stored images and obtained images. This could allow the system to identify the vehicle's current status and select the appropriate configuration setting for the vehicle's systems with greater accuracy.

In some examples, the configuration circuitry is configured to receive user preferences to update the configuration setting. This could allow a user, such as a mechanic or a vehicle owner, to customize the configuration of the vehicle's systems based on their preferences.

In some examples, the configuration circuitry is configured to revert to a previous configuration in the event of an unsuccessful implementation of the received configuration setting. This could allow the system to ensure that the vehicle's systems are correctly configured, even if an error occurs during the implementation of a new configuration setting.

In some examples, the networked storage is configured to update the stored images with new vehicle configurations after they become available. This could allow the system to keep up to date with the latest vehicle configurations and ensure that the vehicle's systems are configured based on the vehicle's current status.

In some examples, the networked storage is configured to maintain a ledger of the configuration settings of the vehicle. This could allow the system to keep a record of the changes that have been made to the vehicle's systems, which could be useful for troubleshooting or maintenance purposes.

In some examples, the networking circuitry is configured to perform data compression to reduce the amount of data transmitted. This could allow the system to transmit images of the vehicle and configuration settings more efficiently, reducing the amount of network bandwidth used.

In some examples, the networking circuitry creates a secure connection protocol with the networked storage to ensure the privacy and integrity of the transmitted images. This could allow the system to protect the privacy of the vehicle's data and ensure that the images and configuration settings are not tampered with during transmission.

According to some aspects of the present invention, there is provided a method comprising: capturing, using at least one image capture device, at least one or more images of a vehicle; transmitting, using networking circuitry, the obtained one or more images to network connected storage, the storage comprising one or more images of possible vehicle configurations; comparing, using a processor, the obtained images with the stored images to identify a configuration status of the vehicle; selecting, using the processor, a configuration setting for a vehicle system based on the identified configured status; receiving, at the networking circuitry, the configuration setting; and implementing, using configuration circuitry, the received configuration setting on the vehicle system.

In some examples, the vehicle system is configured at vehicle production line, the method comprising: capturing the one or more of the images during assembly of the vehicle on the vehicle production line; selecting the configuration setting, e.g., in real-time, during assembly of the vehicle on the vehicle production line; and implementing the received configuration to complete assembly of the vehicle on the production line.

In some examples, the vehicle system is configured at a dealership, the method comprising: capturing the one or more of the images using a mobile user device; and transmitting, from the mobile device, the obtained one or more images in response determining to a change in at least one vehicle component and/or desired vehicle setting.

In some examples, the vehicle system is configured during operation by an end user, the method comprising:
capturing the one or more of the images by one or more environment image capturing devices located in an environment in which the vehicle operates; and transmitting, from the environmental image capturing devices, the obtained one or more images in response to determining a change in at least one vehicle component and/or an updated vehicle setting.

According to one aspect of the present invention, a vehicle comprising: at least one image capturing device configured to obtain one or more images of a vehicle; networking circuitry configured to transmit the obtained one or more images to network connected storage, the storage comprising one or more images of possible vehicle configurations; a processor configured to compare the obtained images with the stored images to identify a configuration status of the vehicle, and select a configuration setting for a vehicle system based on the identified configured status; wherein the networking circuitry is configured to receive the configuration setting; and configuration circuitry configured to implement the received configuration setting on the vehicle system.

According to one aspect of the present invention, a computer-readable medium is provided. The computer-readable may include instructions which, when executed by a processor, cause the processor to perform the steps of capturing, with at least one image capture device, at least one or more images of a vehicle; transmitting, with networking circuitry, the obtained one or more images to network connected storage, the storage comprising one or more images of possible vehicle configurations; comparing, with a processor, the obtained images with the stored images to identify a configuration status of the vehicle; selecting a configuration setting for a vehicle system based on the identified configured status; receiving, with the networking circuitry, the configuration setting; and implementing, with configuration circuitry, the received configuration setting on the vehicle system.

These examples and other aspects of the disclosure will be apparent and elucidated with reference to the example(s) described hereinafter. It should also be appreciated that particular combinations of the various examples and features described above and below are often illustrative and any other possible combination of such examples and features are also intended, notwithstanding those combinations that are clearly intended as mutually exclusive.

The foregoing general description of the illustrative embodiments and the following detailed description thereof are merely exemplary aspects of the teachings of this disclosure and are not restrictive.

### BRIEF DESCRIPTION OF FIGURES

The above and other objects and advantages of the disclosure will be apparent upon consideration of the following detailed description, taken in conjunction with the accompanying drawings, in which:
FIG. 1 depicts the multiple stages at which the processes for configuration vehicle systems may be applied, in accordance with some examples of the present disclosure;
FIG. 2A shows a flowchart comprising the steps involved in the process for configuring vehicle systems based on image recognition, in accordance with some examples of the present disclosure;
FIG. 2B shows a flowchart related to a decision-making process for vehicle configuration changes, in accordance with some examples of the present disclosure;
FIG. 3 a block diagram of a system for vehicle systems configuration based on image recognition, in accordance with some examples of the present disclosure;
FIG. 4 displays a block diagram of a vehicle system configuration based on image recognition, in accordance with some examples of the present disclosure;
FIG. 5 depicts a user interface for providing user preferences for the configuration settings received by the vehicle systems, in accordance with some examples of the present disclosure.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

In some examples, the present disclosure relates to a system and method for configuring vehicle systems based on image recognition. The system and method may be designed to recognize the equipment of a vehicle and select the appropriate configuration for all its systems. This may eliminate the time-consuming process that typically requires skilled personnel to manually configure the vehicle.

In some examples, the system operates by comparing captured images of the vehicle's interior and/or exterior with stored images of vehicle configurations, e.g., comprising possible accessories, configurable options, peripheral devices, ancillary devices and/or optional extras. This comparison may allow the system to identify the vehicle's current status and select a configuration based on this status. The images can be obtained through various means, including the vehicle's own cameras, cameras in an environment in which the vehicle operates, cameras in the production line, and/or uploaded a user device of the vehicle's owner/operator.

In some examples, the system can handle a range of vehicle configurations, configuration statuses, and configuration settings related to, but not limited to, an anti-lock braking system (ABS), a speedometer, a stereo system, a navigation system, a charger, internal lights, a screen size, cargo, and a cargo carrier of the vehicle. It can also account for changes in ride height, advanced driver assistance systems (ADAS), and the presence of a winch or tow-bar.

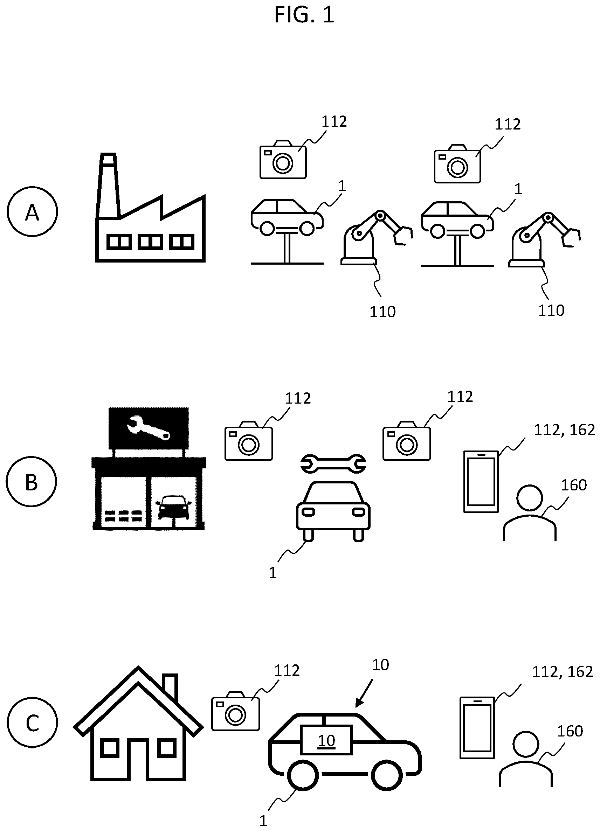

FIG. 1 depicts the multiple stages at which the processes for configuration vehicle systems may be applied, in accordance with some examples of the present disclosure. In some examples, the systems and methods operate in at least one of the multiple stages, as shown in FIG. 1. Stage A is during a production line at the factory and factory end-of-line (EOL) configuration, Stage B is a dealership configuration stage, and stage C is a customer-level configuration stage. However, it should be understood that these stages are provided as examples of where the systems and methods may be implemented, and more or fewer stages are considered to be within the scope of the present disclosure. At each stage, different methods may be used to acquire images of the vehicle. The advantages of this may include saving time and money for the company, dealers, and workshops, and ensuring that the vehicle is configured to its optimum state. The system also reduces the reliance on skilled personnel for vehicle configuration.

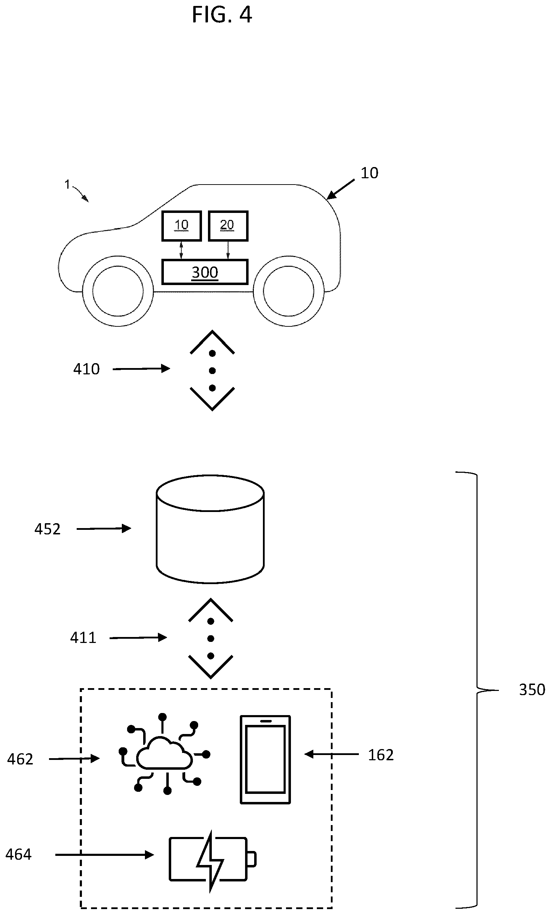

Referring to FIG. 1, in particular at stage A, there is shown a factory production line and factory production end-of-line comprising a plurality of robotic arms 110, a vehicle 1, and a plurality of image capturing devices 112. The system helps ensure that a vehicle is configured correctly (or to a certain configuration, e.g., based on an intended operation of the vehicle) before the vehicle leaves the production line. Here, the image capturing devices 112 may include cameras integrated into an assembly line, e.g., as part of robotic arms 110 that are also tasked with assembling the vehicle, cameras inside the vehicle (such as a user facing camera), cameras outside the vehicle (such as sentry cameras, dash cameras, reversing cameras, and the like) and/or a user device of an operator on an assembly line (not shown). These image capturing devices 112 capture images of the vehicle 1 as it progresses through the assembly line, and the images are transmitted to network connected storage (such as database 452 of FIG. 4 ). A processor (such as processor 462 of FIG. 4), often located on-site, compares these images with the stored configurations to identify the vehicle's 1 current status. As parts are added and the vehicle 1 takes shape, the system dynamically selects and implements the appropriate configuration settings, e.g., in real-time or near real-time. This ensures that by the time the vehicle reaches the end of the production line, it is configured and ready for delivery/use.

Referring to stage B in FIG. 1, there is shown a vehicle dealership associated with a vehicle 1, a plurality of image capturing devices 112, a user device 162, and a user 160. At this stage, the system facilitates the customization and/or reconfiguration of vehicles based on dealer or customer settings, such as preferences and/or operational requirements of the vehicle. Dealerships may use mobile user devices 160, such as tablets or smartphones, equipped with cameras to capture images of the vehicle, in addition to, in some examples, workshop bays fitted with cameras. These images are then transmitted to the network connected storage, where the processor compares them with the stored images to determine any changes in vehicle components or to update user settings. This allows dealers to quickly configure vehicles to meet specific customer requests or to update vehicle systems with new features and options that may have become available after the vehicle was manufactured.

Referring to stage C in FIG. 1, there is shown a representation of an end user 160, a vehicle 1 parked outside the users home and an image capturing device 112. The system offers a user-friendly way to update the user's vehicle configuration settings , e.g., as per their changing requirements. As with all the above stages, the vehicle's own cameras can capture images of the interior and exterior 10, which are then transmitted to the network connected storage. The processor compares these images with the stored configurations to identify the vehicle's current status. If a change in vehicle components is detected, or if the user has a new preference for a setting, the system selects and implements the new configuration setting. This allows vehicle owners to customize their vehicle's systems, such as the infotainment preferences, mirror positions and configurations, or driving modes, enhancing their driving experience and ensuring that the vehicle adapts to their lifestyle, and/or meets on or more operational requirements of the vehicle, e.g., based on the vehicle's determined use type (such as cargo transport, people transport, operational environment, etc.). In addition, in some examples, the user 160 may have a user device 162 with an application for providing images to the network connected storage 452 (shown in FIG. 4). Moreover, in some examples, the user's home may have one or more imaging devices 112 which may also be used to provide information to the network connected storage 452 as described herein.

At each of the three stages, the system's ability to capture, transmit, compare, and implement configuration settings based on image recognition streamlines the vehicle configuration process, making it more efficient, accurate, and responsive to the specific requirements at each stage of the vehicle's lifecycle. Moreover, a user 160 may add further configurations based on their preferences for a more granular configuration of the vehicle 1.

As will be appreciated by one skilled in the art, a user may be a factory operator, salesman at a dealership, mechanic, an owner of the vehicle, or the like. Similarly, an image capturing device may be an interior vehicle camera, exterior vehicle camera, factory camera, robotic arm camera, dealership bay camera, mechanic workshop bay camera, user device, or the like. These are all considered examples within the scope of the present disclosure, and any specific examples referred to herein should not be considered limiting or mutually exclusive with another example, unless specifically referred to as such.

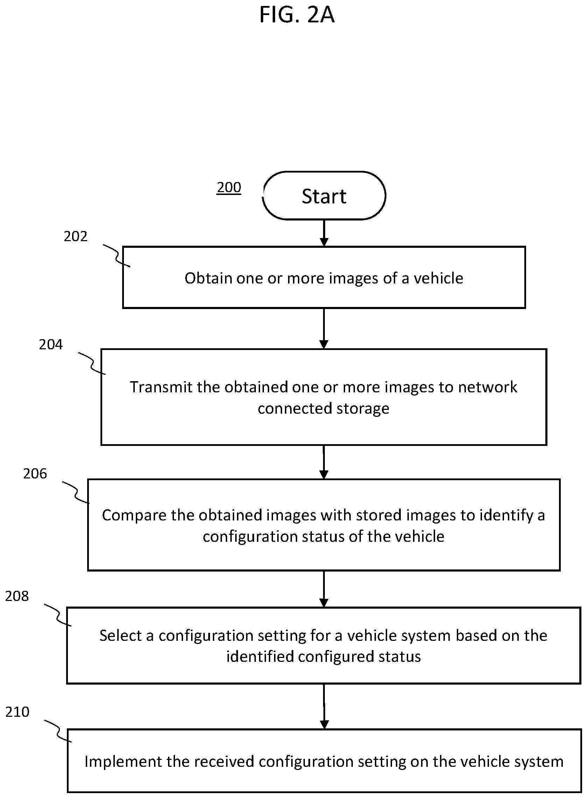

FIG. 2A illustrates a flowchart outlining the process for configuring vehicle systems based on image recognition. The process begins at the process start point, leading to the image acquisition step 202 where one or more images of a vehicle are obtained. This image acquisition process may involve capturing at least one or more images of a vehicle using an image capture device. The image capture device may be any device capable of capturing images, such as a camera or a sensor. This image may be obtained by the vehicle itself if it is equipped with its own cameras. Additionally or alternatively, the image may be captured by other means and transferred to the vehicle.

Following the image acquisition step 202, the process proceeds to the image transmission step 204. During this step, the obtained images are transmitted to network-connected storage using networking circuitry. The network-connected storage may be any storage system that is connected to a network and capable of storing images, such as a server or a cloud storage system. The network-connected storage may be internal to the vehicle or remotely located. The storage stores calibrations for all possible vehicle configurations. A processor reviews the captured image, matches it with the database of stored images, and selects the correct configuration for the vehicle's current status.

Next, the process moves to the image comparison step 206. During this step, a processor compares the obtained images with the stored images to identify a configuration status of the vehicle. The processor may be any computational device capable of comparing images, such as a computer or a microprocessor.

Based on the comparison, the process proceeds to the configuration selection step 208. During this step, a configuration setting for a vehicle system is selected based on the identified configured status. The configuration setting may be any setting that configures a system of the vehicle, such as a setting in an ECU of the vehicle, e.g., a setting for the vehicle's braking system or navigation system.

In the example shown in FIG. 2A, the process concludes with the configuration implementation step 210. During this step, the received configuration setting is implemented on the vehicle system using configuration circuitry. The configuration circuitry may be any circuitry capable of implementing configuration settings, such as a controller or a microcontroller. The configuration implementation step 210 completes the process, resulting in a vehicle system that is configured based on the vehicle's current status as identified through image recognition.

Put another way, the selected configuration, which is optimized for the vehicle's current status, is then applied to the vehicle. This application may be done directly if the computer is internal to the vehicle. Alternatively, if the computer is external to the vehicle, the configuration may be applied via over-the-air (OTA) updates.

In some examples, the process concludes with the step of regularly attaining images of the vehicle to check for changes. If a new change is detected, the process starts again. This ensures that the vehicle's systems are consistently updated and configured to match its current status, thereby optimizing the vehicle's performance.

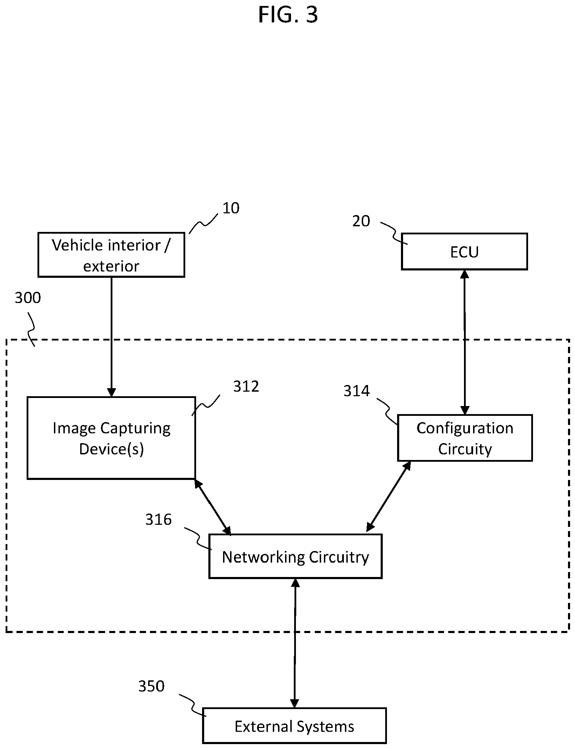

In some examples, the configuration implementation step 210 may involve implementing the received configuration setting on the vehicle system using configuration circuitry 314, as shown in FIG. 3. The configuration circuitry 314 may be any circuitry capable of implementing configuration settings, such as a controller or a microcontroller. The configuration circuitry 314 may be integrated into the vehicle systems 300, or it may be a separate component that is connected to the vehicle systems 300. The configuration circuitry 314 may receive the configuration setting from the networking circuitry 316, and it may implement the configuration setting on the appropriate vehicle system. The configuration circuitry 314 may also be configured to verify the successful implementation of the configuration setting and to provide a confirmation notice. In some cases, if the implementation of the configuration setting is unsuccessful, the configuration circuitry 314 may be configured to revert to a previous configuration. This ensures that the vehicle system remains operational even if a new configuration setting cannot be successfully implemented.

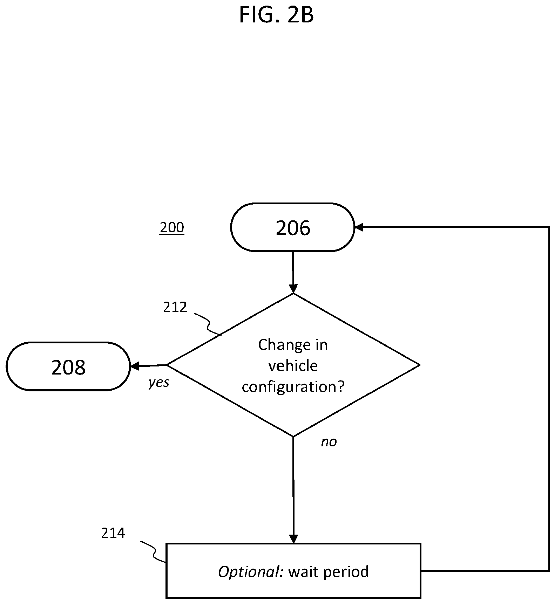

FIG. 2B illustrates a decision-making process 200 for vehicle configuration changes. Process shown in FIG. 2B may be implemented into the process described above with regard to FIG. 2A. Process 200 may begin after the image comparison step 206 of FIG. 2A, where the obtained images of the vehicle are compared with the stored images to identify a configuration status of the vehicle. Following the image comparison step 206, the process leads to a determination step 212. During the determination step 212, it is determined whether a change in vehicle configuration has been detected. This determination may be based on the comparison of the obtained images with the stored images.

If the outcome of the determination step 212 is 'yes', the process follows the yes outcome path to the configuration selection step 208 of FIG. 2A. During the configuration selection step 208, a configuration setting for a vehicle system is selected based on the identified configured status. The configuration setting may be any setting that configures a system of the vehicle, such as a setting for the vehicle's braking system or navigation system.

Conversely, if the outcome of the determination step 212 is 'no', the process optionally continues on to a wait period step 214. During the optional wait period step 214, the system waits before continuing process 200. The duration of the wait period may vary depending on various factors, such as the vehicle's operational status or user preferences. After the optional wait period step 214, the process reverts back to the image comparison step 206 of FIG. 2A. This ensures that the vehicle's systems are consistently checked for changes and configured to match its current status, thereby optimizing the vehicle's performance.

FIG. 3 illustrates a block diagram of a system for vehicle systems configuration based on image recognition. The system includes a vehicle system 300, which comprises various components. One such component is an image capturing device(s) 312, which is configured to capture images of the vehicle interior and/or exterior 10. The image capturing device(s) 312 may include one or more cameras integrated into the vehicle. In some cases, the image capturing device(s) 312 may be a device separate from the vehicle, such as a mobile user device or a camera of an external environment, such as those in a factory or dealership.

Once the images are captured, they are passed on to the networking circuitry 316. The networking circuitry 316 is configured to transmit the obtained images to network connected storage, which is part of the external systems 350, described in more detail with reference to FIG. 3 below. The external systems 350 comprise a network connected storage, such as database 452 of FIG. 4, and may alternatively or in addition comprise a server or a cloud storage system that stores images of possible vehicle configurations.

The external systems 350 comprises a processor (such as processor 462 of FIG. 4), however, in some examples, the processor may be local to the vehicle 1 or a dealership, such as that discussed with reference to FIG. 1. The processor is configured to compare the obtained images with the stored images to identify a configuration status of the vehicle. The processor may be any computational device capable of comparing images, such as a computer, microprocessor(s), microcontrol circuitry, digital signal processors, programmable logic devices, field-programmable gate arrays (FPGAs), application-specific integrated circuits (ASICs), etc., and may include a multi-core processor (e.g., dual-core, quad-core, hexa-core, or any suitable number of cores) or supercomputer. In some examples, processing circuitry may be distributed across multiple separate processors or processing units, for example, multiple of the same type of processing units (e.g. two 6 core processors) or multiple different processors (e.g., a 4 core processor and a 6 core processor).

Based on the identified configuration status, a configuration setting is selected for a vehicle system. This selection process may be carried out by the processor or another component of the external systems 350. The selected configuration setting is then returned to the networking circuitry 316. The networking circuitry is therefore configured to receive information and data, such as the configuration setting. In some examples, the networking circuitry 316 may implement the configuration setting via an over-the-air (OTA) update.

The system comprises configuration circuitry 314, which is configured to implement the received configuration setting on the vehicle system 300. The configuration circuitry 314 may be any circuitry capable of implementing or causing implementation of configuration settings, such as a controller, a microcontroller, or an ASIC. The configuration circuitry 314 interacts with the vehicle's electronic control unit (ECU) 20 to implement the selected vehicle configuration. In some cases, the configuration circuitry 314 may be integrated into the vehicle systems 300, or it may be a separate component that is connected to the vehicle systems 300, for example it may be located in the ECU 20.

In more detail, the configuration circuitry 314 is a component designed to implement the received configuration setting on the vehicle system. The configuration circuitry 314 can be any type of circuitry that has the capability to implement configuration settings. This could include, but is not limited to, a controller or a microcontroller. These devices are designed to manage and control the operations of the vehicle's systems based on the received configuration settings.

The configuration circuitry 314 works in conjunction with the vehicle's electronic control unit (ECU) 20 to implement the selected vehicle configuration. The ECU 20 is a computer within the vehicle that controls one or more of its functions. For example, an ECU may be an ECU of a braking system, a powertrain system, a battery system, etc. An ECU typically receives information from numerous sensors, interprets the data, and controls the vehicle's systems accordingly. When the configuration circuitry 314 receives a new configuration setting, it communicates this information to the ECU 20, which then adjusts or updates the vehicle's systems to match the new configuration.

The integration of the configuration circuitry 314 can vary depending on the specific design of the vehicle systems 300. In some instances, the configuration circuitry 314 may be integrated directly into the vehicle systems 300. This means that it is physically part of the vehicle's systems and works in close conjunction with them. This type of integration can provide benefits in terms of efficiency and speed, as the configuration circuitry 314 can directly control the vehicle's systems without the need for additional interfaces or connections.

In other cases, the configuration circuitry 314 may be a separate component that is connected to the vehicle systems 300. This means that while it is not physically part of the vehicle's systems, it is connected to them and can communicate with them to control their operations, e.g., via a cloud-based network. This type of setup can provide benefits in terms of flexibility and adaptability, as the configuration circuitry 314 can be updated or replaced without needing to modify the vehicle's systems. Regardless of the specific setup, the configuration circuitry 314 plays a pivotal role in ensuring that the vehicle's systems are configured correctly based on the vehicle's current status.

In some examples, the image capturing device(s) 312 may comprise one or more cameras of a mobile user device separate from the vehicle. For instance, a service technician at a dealership or an end user may use a smartphone or tablet to capture images of the vehicle interior and/or exterior 10. These images may then be transmitted to the network connected storage in the external systems 350 via the networking circuitry 316.

In some examples, the image capturing device(s) 312 may comprise one or more cameras of an external environment. For instance, cameras installed in a factory, a dealership, or a user's home may capture images of the vehicle interior and/or exterior 10. These images may then be transmitted to the network connected storage in the external systems 350 via the networking circuitry 316.

In some examples, the networking circuitry 316 may be further configured to implement the configuration setting via an OTA update. This may be particularly useful when the computer that processes the images and selects the configuration setting is located remotely from the vehicle. In such cases, the selected configuration setting may be transmitted from the external systems 350 to the vehicle systems 300 via an OTA update. The configuration circuitry 314 may then implement the received configuration setting on the vehicle system.

In some examples, the image capturing device(s) 312 may be further configured to capture images in a range of lighting conditions. For instance, the image capturing device(s) 312 may include features such as automatic exposure control, high dynamic range imaging, or night vision capabilities. This may enable the image capturing device(s) 312 to capture clear and detailed images of the vehicle interior and/or exterior 10 under various lighting conditions, such as bright sunlight, low light, or artificial lighting.

In some examples, the network connected storage in the external systems 350 may be further configured to store metadata associated with the images of possible vehicle configurations. This metadata may include information such as part numbers, installation dates, configurable options, accessory information, vehicle model, vehicle manufacture date, vehicle identification number, optional extra information, and compatibility information. This metadata may be used by the processor in the external systems 350 to aid in the comparison of the obtained images with the stored images and the selection of the appropriate configuration setting for the vehicle system.

In some examples, the processor in the external systems 350 may be further configured to generate a report of the configuration setting and possible updates to the vehicle's systems. This report may include information such as the current configuration status of the vehicle, the selected configuration setting, and any potential updates that could be applied to the vehicle's systems. The report may be generated after the configuration setting has been selected and before it is implemented on the vehicle system. The report may be stored in the network connected storage in the external systems 350, and it may be accessible to authorized users such as service technicians, vehicle owners, or vehicle manufacturers.

In some examples, the configuration circuitry 314 may be further configured to verify the successful implementation of the configuration setting and to provide a confirmation notice. The verification process may involve checking the status of the vehicle system after the configuration setting has been implemented. If the status of the vehicle system matches the selected configuration setting, the implementation may be considered successful. The confirmation notice may be a message or signal indicating that the configuration setting has been successfully implemented on the vehicle system. The confirmation notice may be displayed on a user interface in the vehicle, sent to a user device, and/or stored in the network connected storage in the external systems 350.

In some examples, the processor in the external systems 350 may use an artificial intelligence trained on possible vehicle configurations to recognize patterns and differences between the stored images and obtained images. The artificial intelligence may be a machine learning model, a neural network, or any other type of artificial intelligence that is capable of learning from data and making predictions or decisions. The artificial intelligence may be trained on a dataset of images of possible vehicle configurations and their corresponding configuration settings. By analyzing the patterns and differences in the images, the artificial intelligence may be able to identify the configuration status of the vehicle and select the appropriate configuration setting.

In some examples, the processor in the external systems 350 may leverage the capabilities of artificial intelligence (AI) to facilitate the vehicle configuration process. The AI could be trained on a multitude of possible vehicle configurations, enabling it to recognize patterns and differences between the images captured in real-time and the images stored in the database. The AI could be a machine learning model, a neural network, support vector machine, or any other type of AI that is capable of learning from data and making predictions or decisions.

The Al's training could involve a dataset of images representing various possible vehicle configurations and their corresponding configuration settings. This dataset could include images of different vehicle models, trim lines, factory options, dealer options, and extras. It could also include images representing different configurations of vehicle systems, such as the anti-lock braking system (ABS), system calibration, speedometer, heaters, stereo system, navigation system, charger, internal lights, screen size, and load box on top of the vehicle. Furthermore, the AI may be trained on datasets including images of different types of users, animals, and/or cargo which would be expected to be inside a passenger vehicle, commercial vehicle, personal vehicle, or the like.

By analyzing the patterns and differences in the images, the AI could accurately identify the current configuration status of the vehicle. For instance, it could recognize the presence of a specific accessory, such as a tow bar and/or type of trailer, and determine that the vehicle's systems require a specific configuration to accommodate this accessory. For example, a driver assist system may be updated to include a software module comprising a trailer-maneuvering assist function. Additionally or alternatively, an ECU of a transmission of the vehicle may be updated with different torque setting to account for an increased towing load, e.g., based on the configuration of the trailer.

Once the processor or AIhas identified the vehicle's configuration status, it could then select the appropriate configuration setting. This setting could be tailored to the vehicle's current status, ensuring that all the vehicle's systems are configured to operate at their optimum performance. The Al's ability to accurately identify the vehicle's configuration status and select the appropriate configuration setting could enhance the efficiency and accuracy of the vehicle configuration process, reducing the time and effort spent on manual configuration. Furthermore, the Al's learning capabilities could allow it to continuously update its knowledge base as new vehicle configurations become available. This could ensure that the AI is able to handle a wide range of vehicle configurations, keeping up with the latest advancements in vehicle technology and design.

In addition, the AI could also be designed to handle a variety of lighting conditions and image qualities, further enhancing its ability to accurately identify the vehicle's configuration status from the captured images. This could be particularly beneficial in scenarios where the images are captured in low-light conditions or where the image quality is compromised due to factors such as dirt or scratches on the camera lens.

Overall, the use of AI in the vehicle configuration process could provide a more efficient and accurate method of configuring vehicle systems, reducing the reliance on skilled personnel and enhancing the overall performance of the vehicle.

In some examples, the configuration circuitry 314 may be further configured to receive user preferences to update the configuration setting. The user preferences may be inputted through a user interface in the vehicle or a user device. The user preferences may include preferences for specific features or settings of the vehicle systems. For instance, a user may prefer a specific setting for the vehicle's navigation system, stereo system, and/or heating system. The configuration circuitry 314 may take these user preferences into account when implementing the configuration setting on the vehicle system.

In some examples, the configuration circuitry 314 may be further configured to revert to a previous configuration in the event of an unsuccessful implementation of the received configuration setting. If the implementation of the configuration setting is unsuccessful, the configuration circuitry 314 may automatically revert the vehicle system to its previous configuration. This may ensure that the vehicle system remains operational and that the vehicle's performance is not adversely affected by an unsuccessful configuration update.

In some examples, the networked storage in the external systems 350 may be further configured to update the stored images with new vehicle configurations after they become available. This may involve periodically checking for updates to the vehicle configurations from a vehicle manufacturer or other source, and downloading the updated images to the networked storage. This ensures that the system has the latest information on possible vehicle configurations, which may enhance the accuracy of the image comparison and configuration selection processes.

In some examples, the networked storage in the external systems 350 may be further configured to maintain a ledger of the configuration settings of the vehicle. The ledger may record the history of configuration settings that have been applied to the vehicle, including the dates and times of the configuration updates, the specific configuration settings that were applied, and any user preferences that were taken into account. The ledger may provide a comprehensive record of the vehicle's configuration history, which may be useful for troubleshooting, maintenance, or other purposes.

In some examples, the networking circuitry 316 may be further configured to perform data compression to reduce the amount of data transmitted. Data compression may involve encoding the images or other data in a way that reduces their size without losing the information they contain. This may reduce the bandwidth requirements for transmitting the images to the networked storage in the external systems 350, and may also reduce the storage space requirements for storing the images.

In some examples, the networking circuitry 316 may create a secure connection protocol with the networked storage in the external systems 350. The secure connection protocol may involve encryption, authentication, or other security measures to protect the privacy and integrity of the transmitted images and other data. This may prevent unauthorized access to the images and other data, and may ensure that the images and other data are not tampered with during transmission.

In some examples, the means for capturing at least one or more images of a vehicle could be a camera, a sensor, or any other image capturing device. The image capturing device may be integrated into the vehicle, or it may be a separate device that is used to capture images of the vehicle. The image capturing device may capture images of the vehicle's interior and/or exterior, and may capture images in a variety of lighting conditions and from various angles. The images captured by the image capturing device may provide a comprehensive view of the vehicle's current status, which may facilitate the image comparison and configuration selection processes.

In some examples, the means for transmitting the obtained one or more images to network connected storage could be a wired or wireless connection, or any other data transmission method. For instance, the networking circuitry 316 may use a wired connection, such as an Ethernet cable, to transmit the images to the network connected storage in the external systems 350. Alternatively, the networking circuitry 316 may use a wireless connection, such as Wi-Fi or cellular data, to transmit the images. In some cases, the networking circuitry 316 may use other data transmission methods, such as optical transmission or radio frequency transmission.

In some examples, the means for comparing the obtained images with the stored images to identify a configuration status of the vehicle could be a processor, a computer, or any other computational device. For instance, the processor in the external systems 350 may be a microprocessor, a central processing unit (CPU), a graphics processing unit (GPU), or any other type of processor. The processor may use various image comparison algorithms, such as pattern matching algorithms or feature extraction algorithms, to compare the obtained images with the stored images and identify the configuration status of the vehicle.

In some examples, the means for selecting a configuration setting for a vehicle system based on the identified configured status could be a processor, a computer, or any other computational device. For instance, the processor in the external systems 350 may use various decision-making algorithms, such as decision tree algorithms or rule-based algorithms, to select the appropriate configuration setting based on the identified configuration status. The processor may take into account user preferences or other factors when selecting the configuration setting.

In some examples, the means for receiving the configuration setting could be a receiver, a transceiver, or any other data receiving device. For instance, the networking circuitry 316 may include a receiver or a transceiver that is capable of receiving the configuration setting from the external systems 350. The receiver or transceiver may use various data reception methods, such as wired reception or wireless reception, to receive the configuration setting.

In some examples, the means for implementing the received configuration setting on the vehicle system could be a controller, a processor, or any other device capable of implementing configuration settings. For instance, the configuration circuitry 314 may be a controller, a microcontroller, a processor, or any other device that is capable of implementing the received configuration setting on the vehicle system. The configuration circuitry 314 may interact with the vehicle ECU 20 or other components of the vehicle systems 300 to implement the configuration setting.

FIG. 4 illustrates a block diagram of a vehicle system configuration based on image recognition. The vehicle representation 1 includes a vehicle interior/exterior 10 and a vehicle ECU 20, which are both integral parts of the vehicle systems 300. The vehicle systems 300 may include various components and systems of the vehicle, such as the engine, transmission, brakes, steering, and other systems. The vehicle systems 300 may also include various electronic systems, such as the vehicle's infotainment system, navigation system, and other electronic systems. The ECU 20 may be configured to control, at least in part, on or more of the vehicle systems 300.

The vehicle interior/exterior 10 may include various features and components of the vehicle, such as the seats, dashboard, steering wheel, doors, windows, and other interior and exterior features. The vehicle interior/exterior 10 may also include various accessories and optional extras, such as infotainment systems, a tow bar, and other accessories and extras.

The vehicle ECU 20 may be a computer or other electronic device that controls various systems and functions of the vehicle. The vehicle ECU 20 may receive input from various sensors and other devices in the vehicle, and it may control various actuators and other devices to operate the vehicle's systems and functions. The vehicle ECU 20 may also store various configuration settings for the vehicle's systems and functions, and it may implement these configuration settings based on the vehicle's current status and user preferences.

The vehicle systems 300 are in communication with external systems 350, which store calibration data for various possible vehicle configurations, communication link 410. The external systems 350 may include various servers, databases, and other systems that store images of possible vehicle configurations and calibration data for these configurations. The external systems 350 may also include various computational devices, such as processors and computers, that process the images and calibration data to select the correct vehicle configuration. Any external system 350 that are not in physical contact and communication are communicatively coupled via communication link 411.

In more detail, the communication links 410, 411 may be one or more networks including the Internet, a mobile phone network, a mobile voice or data network (e.g., a 3G, 4G, 5G or LTE network), a mesh network, peer-to-peer network, cable network, cable reception (e.g., coaxial), microwave link, DSL (Digital Subscriber Line) reception, cable internet reception, fibre reception, over-the-air infrastructure or other types of communications network or combinations of communications networks. There may be a plurality of communication links establishing a communication network. For example, the vehicle system 300 may be coupled to a second communication network (e.g., Bluetooth, Near Field Communication, service provider proprietary networks, or wired connection) to retrieve information such as user preferences. Paths may separately or together include one or more communications paths, such as a satellite path, a fiber-optic path, a cable path, a path that supports Internet communications, free-space connections (e.g., for broadcast or other wireless signals), or any other suitable wired or wireless communications path or combination of such paths.

The diagram shown in FIG. 4 illustrates the flow of information from the vehicle's internal components, the vehicle interior/exterior 10 and the vehicle ECU 20, through the vehicle systems 300, to the external systems 350. The external systems 350 process this information to select and, in some examples, apply the correct vehicle configuration. The selected vehicle configuration is then communicated back to the vehicle systems 300, which implement the configuration on the vehicle's systems and functions.

The external systems 350 may comprise at least one of: networked storage 452, vehicle charging point 464, a user device 162, and a processor 462. The networked storage 452 may store the images of possible vehicle configurations and the calibration data for these configurations. The vehicle charging point 464 may be a station or device where the vehicle is charged, and it may also provide a connection for transmitting data between the vehicle and the external systems 350. The user device 162 may be a smartphone, tablet, computer, or other device used by the user to interact with the vehicle and the external systems 350. The processor 462 may be computation unit, a computer, processor, or other device that processes the images and calibration data to select the correct vehicle configuration. The processor may be a microprocessor, central processing unit (CPU), graphics processing unit (GPU), or other type of processor that performs various computations and operations.

In more detail, all references to processors and configuration circuitry 314 may include processing circuitry, control circuitry, and storage (e.g., RAM (Random Access Memory), ROM (Read Only Memory), hard disk, removable disk, etc.). All such devices may include an input/output path . I/O path may provide device information, or other data, over a local area network (LAN) or wide area network (WAN), and/or other content and data. For example, configuration circuitry 314 may send and receive commands, requests, signals (digital and analogue), and other suitable data using an I/O path, which may comprise I/O circuitry. The I/O path may connect configuration circuitry 314 to one or more communications paths such as those to the networking circuitry 316, shown in FIG. 3. In some examples, configuration circuitry 314 may be an onboard computer of a vehicle, such as a vehicle 1.

In some examples, the networked storage is a component that stores images of possible vehicle configurations. These images serve as a reference for the system when it compares the captured images of the vehicle with the stored images to identify the vehicle's current status. The networked storage may be a server or a cloud storage system that is connected to a network, allowing for seamless transfer and retrieval of images.

As referred to herein, the phrase "networked storage" or "storage device" should be understood to mean any device (physical or cloud-based) for storing electronic data, computer software, or firmware, such as random-access memory, read-only memory, hard drives, solid-state devices, quantum storage devices, or any other suitable fixed or removable storage devices, and/or any combination of the same. The non-volatile memory may also be used (e.g., to launch a boot-up routine and other instructions). Storage may be subdivided into different spaces such as kernel space and user space. Kernel space is a portion of memory or storage that is, e.g., reserved for running a privileged operating system kernel, kernel extensions, and most device drivers. User space may be considered an area of memory or storage where application software generally executes and is kept separate from kernel space so as to not interfere with system-vital processes. Kernel mode may be considered as a mode when control circuitry has permission to operate on data in kernel space, while applications running in user mode must request control circuitry to perform tasks in kernel mode on its behalf.

In some examples, the vehicle charging point is another component that may be part of the external systems 350. While its primary function is to provide a station or device where the vehicle is charged, it may also serve as a point of data exchange. The vehicle charging point may be equipped with networking capabilities that allow it to transmit data, such as images or configuration settings, between the vehicle and the external systems 350.

In some examples, a user device is another component that may be part of the external systems 350. This could be a smartphone, tablet, or computer used by a user, such as a mechanic or a vehicle owner, to interact with the vehicle and the external systems 350. The user device may be equipped with a camera that can capture images of the vehicle for comparison with the stored images. It may also have an interface that allows the user to input their preferences for the configuration settings.

In some examples, the processor 462 is a component that performs various computations and operations. This could be a microprocessor, a central processing unit (CPU), a graphics processing unit (GPU), or any other type of processor. The processor may be responsible for comparing the obtained images with the stored images, identifying the configuration status of the vehicle, and selecting the appropriate configuration setting. The processor may also control the implementation of the configuration setting on the vehicle system.

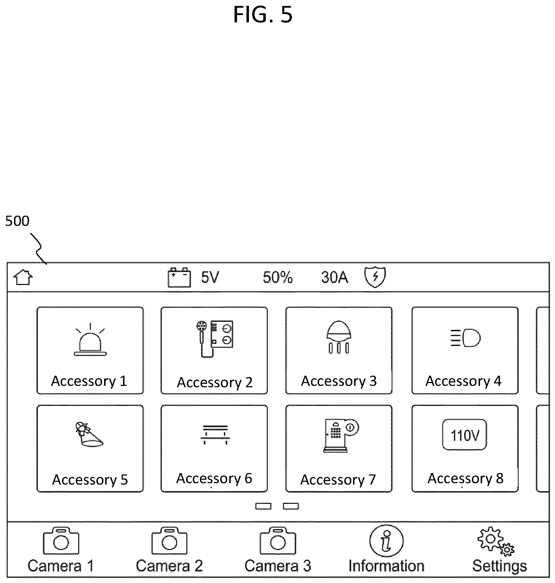

FIG. 5 illustrates a user interface 500. The user interface 500 may be a display screen, a touch screen, a control panel, or any other type of interface that allows a user to interact with the vehicle systems 300 and the external systems 350. The user interface 500 may be located in the vehicle's dashboard, center console, steering wheel, or any other location within the vehicle. Moreover, the user interface 500 may be displayed on a user device or a user mobile device, e.g., in addition to or instead of a display of the vehicle.

The user interface 500 may include various vehicle status indicators. These indicators may provide information about the power supply and capacity levels available to the vehicle. For instance, the indicators may display the vehicle's battery level, fuel level, engine temperature, speed, and other status information. The indicators may be displayed in various formats, such as numerical values, graphical bars, icons, or other visual representations.

The layout of the user interface 500 may provide a user-friendly interface for providing user preferences for the configuration settings received by the vehicle systems 200. The user interface 500 may include various controls, buttons, sliders, touch areas, or other input devices that allow the user to input their preferences. The user interface 500 may also include various menus, options, settings, or other features that allow the user to customize the configuration settings.

The user interface 500 may be in communication with the external systems 350, which can be fed to the external system 350. The user can select anyone of the various accessories that are configurable in the user interface 500 to provide a user preference to the configuration setting for those accessories in the vehicle interior and/or exterior 10. For instance, the user may select a specific setting for the vehicle's navigation system, stereo system, heating systems, or other systems. The user's preferences may be transmitted to the external systems 350, which may process the preferences and select the appropriate configuration setting for the vehicle system. The selected configuration setting may then be implemented on the vehicle system by the configuration circuitry 314.

A plurality of clauses are provided below that are considered further non-limiting examples of the present disclosure. The clauses are provided with exemplary advantages of each clause, where appropriate.

**Clause 1:** The present disclosure has a clause of a vehicle configurator system, which comprises at least one image capturing device for obtaining one or more images of a vehicle. The system also includes networking circuitry configured to transmit the obtained one or more images to network connected storage. The storage comprises one or more images of possible vehicle configurations such as accessories, configurable options, and extras. The system also includes a processor for comparing the obtained images with the stored images to identify a configuration status of the vehicle. The processor also selects a configuration setting for a vehicle system based on the identified configured status. The networking circuitry is configured to receive the configuration setting. The system also includes configuration circuitry configured to implement the received configuration setting on the vehicle system.

An exemplary advantage of Clause 1 is that it provides a comprehensive and automated solution for vehicle configuration, which can potentially reduce the time and labor traditionally associated with manual vehicle configuration processes. By utilizing image recognition technology, the system can quickly and accurately determine the current configuration status of a vehicle and apply the appropriate settings, thereby increasing efficiency and reducing the likelihood of human error. This can lead to enhanced customer satisfaction due to the precise and rapid configuration of vehicle systems according to the specific equipment and options present in the vehicle.

**Clause 2:** In the system of clause 1, the at least one image capturing device comprises one or more cameras integrated into the vehicle. An exemplary advantage of this clause is that it allows for the seamless integration of the image capturing process into the vehicle's existing systems, potentially reducing the complexity associated with additional external devices. Integrated cameras can continuously monitor the vehicle's configuration status in real-time, providing up-to-date information for the configuration system to process, which can enhance the accuracy and efficiency of the vehicle configuration process.

**Clause 3:** In the system of clauses 1 or 2, the at least one image capturing device comprises one or more cameras of a mobile user device separate from the vehicle. An exemplary advantage of this clause is that it allows for flexibility and convenience in the vehicle configuration process. By utilizing cameras from a mobile user device, such as a smartphone or tablet, the system can be easily accessed and operated by users such as vehicle owners or service personnel without the reliance on specialized equipment. This capability can facilitate the configuration process in a variety of settings, including locations where integrated vehicle cameras or external environment cameras are not available, thereby enhancing the system's usability and practicality.

**Clause 4:** In the system of any of clauses 1 to 3, the at least one image capturing device comprises one or more cameras of an external environment. An exemplary advantage of this clause is that it enables the vehicle configurator system to utilize cameras that are not limited to those installed on or within the vehicle itself, thereby expanding the range of image capture possibilities. This can be particularly beneficial in settings such as manufacturing facilities, dealerships, or service centers where fixed cameras can capture images of the vehicle from multiple angles and under controlled lighting conditions, leading to more accurate recognition and configuration of the vehicle's systems. Additionally, leveraging external cameras can facilitate the configuration process for large fleets of vehicles, where centralized image capturing can streamline operations and reduce the time and resources spent on individual vehicle assessments.

**Clause 5:** In the system of any of clauses 1 to 4, the networking circuitry is further configured to implement the configuration setting via an over-the-air, OTA, update. An exemplary advantage of this clause is that it enables remote updating of vehicle systems, which can greatly enhance the convenience and efficiency of the configuration process. With the capability to implement configuration settings via an over-the-air (OTA) update, vehicle owners and manufacturers can ensure that vehicles are equipped with the latest features and optimizations without the need for physical access to the vehicle. This can save time associated with manual updates, while also allowing for rapid deployment of updates to large fleets of vehicles. Additionally, OTA updates can be scheduled at the user's convenience, minimizing disruption and vehicle downtime.

**Clause 6:** In the system of any of clauses 1 to 5, the at least one image capturing device is further configured to capture images in a range of lighting conditions such as low-light environments. An exemplary advantage of this clause is that it allows the vehicle configurator system to operate effectively under a variety of lighting conditions, enhancing its versatility and reliability. By being able to capture images in low-light environments, the system can accurately identify the vehicle's configuration status regardless of the time of day or lighting conditions present, which is particularly beneficial for continuous operation in settings such as underground parking lots, tunnels, or during nighttime. This capability ensures that the vehicle configuration process can be carried out without delay or the need for additional lighting equipment, thereby enhancing the system's efficiency and user convenience.

**Clause 7:** In the system of any of clauses 1 to 6, the network connected storage is further configured to store metadata associated with the images of possible vehicle configurations. The metadata comprises at least one of: part number, installation date, configurable options, accessory information, vehicle model, vehicle manufacture date, vehicle identification number, optional extra information, and compatibility information. An advantage of this clause is that it enhances the system's ability to accurately match the obtained images with the appropriate vehicle configurations by providing additional context through metadata. This metadata can facilitate a more precise and efficient identification process, reducing the likelihood of errors in configuration selection. It also allows for better tracking and management of vehicle configurations over time, which can be particularly useful for maintenance, warranty services, and future upgrades.

**Clause 8:** In the system of any of clauses 1 to 7, the processor is further configured to generate a report of the configuration setting and possible updates to the vehicle's systems. An advantage of this clause is that it provides a comprehensive overview of the vehicle's configuration status and any potential updates that may be applied to enhance its systems. This reporting capability can be instrumental for maintenance, diagnostics, and ensuring that the vehicle is operating with the latest and most optimized settings, thereby enhancing overall vehicle performance and user satisfaction. Additionally, it can serve as a valuable record for service history and future reference.

**Clause 9:** In the system of any of clauses 1 to 8, the configuration circuitry is further configured to verify the successful implementation of the configuration setting and to provide a confirmation notice. An advantage of this clause is that it ensures reliability and user confidence in the vehicle configurator system. By verifying the successful implementation of the configuration setting, the system can confirm that the vehicle's systems are correctly configured according to the identified status. The provision of a confirmation notice further enhances the user experience by providing clear feedback that the configuration process has been completed successfully, thereby reducing uncertainty and the potential for errors that could affect the vehicle's performance.

**Clause 10:** In the system of any of clauses 1 to 9, the processor uses an artificial intelligence trained on possible vehicle configurations to recognize patterns and differences between the stored images and obtained images. An advantage of this clause is that it allows the system to utilize advanced machine learning techniques to enhance the accuracy and efficiency of the vehicle configuration process. By employing artificial intelligence that has been trained on a wide array of possible vehicle configurations, the system can quickly and accurately identify the specific configuration of a given vehicle based on the images obtained. This can lead to a reduction in manual oversight and potential human error, as the AI can consistently recognize patterns and detect differences that may not be immediately apparent to human inspectors. Additionally, the AI can adapt and learn from new data, which means the system can continually evolve and stay current with the latest vehicle configurations and updates, ensuring that the vehicle configuration process remains robust over time.

**Clause 11:** In the system of any of clauses 1 to 10, the configuration circuitry is further configured to receive user preferences to update the configuration setting. An exemplary advantage of this clause is that it allows for personalized customization of the vehicle's systems according to the user's specific preferences and requirements. This capability enhances the user experience by enabling the vehicle to adapt to individual driving styles, comfort preferences, or accessibility requirements, thereby increasing user satisfaction and engagement with the vehicle's features. Additionally, by allowing users to input their preferences, the system can facilitate a more intuitive and user-centric approach to vehicle configuration, potentially leading to increased brand loyalty and customer retention.

**Clause 12:** In the system of any of clauses 1 to 11, the configuration circuitry is further configured to revert to a previous configuration in the event of an unsuccessful implementation of the received configuration setting. An exemplary advantage of this clause is that it provides redundancy during the configuration process, ensuring that the vehicle's systems can be restored to a known, stable state in the event that a new configuration cannot be successfully applied. This feature enhances the reliability of the vehicle configurator system by preventing potential malfunctions or operational issues that could arise from an unsuccessful configuration update. It also minimizes downtime and the associated inconvenience to the user, as the vehicle can continue to operate with its previous settings while any issues are resolved.

**Clause 13:** In the system of any of clauses 1 to 12, the networked storage is further configured to update the stored images with new vehicle configurations after they become available. An exemplary advantage of this clause is that it ensures the vehicle configurator system remains current and effective over time by incorporating the latest vehicle configurations as they are released. This continuous updating process allows for the system to recognize and configure new features and options that may become available after the initial release of a vehicle model, thereby extending the system's utility and relevance throughout the vehicle's lifecycle. It also supports the adaptability of the system to evolving automotive technologies and market trends, ensuring that the vehicle can be configured with the latest advancements for enhanced performance and customer satisfaction.

**Clause 14:** In the system of any of clauses 1 to 13, the networked storage is further configured to maintain a ledger of the configuration settings of the vehicle. An exemplary advantage of this clause is that it provides a reliable and traceable record of all configuration settings applied to the vehicle over time. This ledger can be invaluable for service and maintenance purposes, as it allows technicians to quickly understand the vehicle's configuration history, diagnose issues more effectively, and ensure that all systems are up to date. It also enhances accountability and can be used to verify that all changes to the vehicle's systems have been authorized and implemented correctly, thereby enhancing overall vehicle reliability.

**Clause 15:** In the system of any of clauses 1 to 14, the networking circuitry is further configured to perform data compression to reduce the amount of data transmitted. An exemplary advantage of this clause is that it allows for more efficient use of network resources by reducing the bandwidth requirements for transmitting images and configuration data between the vehicle and network connected storage. This can lead to faster transmission times, lower data transmission, and the ability to work effectively even in areas with limited network capacity, thereby enhancing the overall responsiveness and reliability of the vehicle configurator system.

**Clause 16:** In the system of any of clauses 1 to 15, the networking circuitry creates a secure connection protocol with the networked storage to ensure the privacy and integrity of the transmitted images. An exemplary advantage of this clause is that it provides enhanced security measures to protect sensitive data transmitted between the vehicle and networked storage. By creating a secure connection protocol, the system ensures that the privacy and integrity of the images and configuration data are maintained, preventing unauthorized access, data breaches, or tampering. This is particularly pertinent as vehicles become increasingly connected and reliant on data exchange, making cybersecurity a paramount concern for manufacturers and users alike. A secure connection protocol can thus foster trust in the vehicle configurator system and support data protection.

**Clause 17:** The patent application also has a clause comprising a method for configuring a vehicle system. The method comprises capturing, with at least one image capture device, at least one or more images of a vehicle. The method also includes transmitting, with networking circuitry, the obtained one or more images to network connected storage. The storage comprises one or more images of possible vehicle configurations. The method also includes comparing, with a processor, the obtained images with the stored images to identify a configuration status of the vehicle. The method also includes selecting a configuration setting for a vehicle system based on the identified configured status. The method also includes receiving, with the networking circuitry, the configuration setting. The method also includes implementing, with configuration circuitry, the received configuration setting on the vehicle system.

**Clause 18:** Which may be an independent method clause, or may comprise the method of clause 17, describes a method wherein the vehicle system is configured at a factory end-of-line. The capturing of the one or more of the images is carried out, at least in part, by a plurality of robotic arms also configured to perform assembly tasks on a vehicle production line. The selecting of the configuration setting is carried out in real-time as a plurality of parts are added to the vehicle by the plurality of robotic arms. The implementing of the received configuration is completed as the vehicle finishes the production line assembly by the plurality of robotic arms.

**Clause 19:** Which may be an independent method clause, or may comprise the method of clause 17, describes a method wherein the vehicle system is configured at a dealership. The capturing of the one or more of the images is carried out, at least in part, by at least one mobile user device. The transmitting of the obtained one or more images is carried out in response to a change in at least one vehicle component or preferred user setting.

**Clause 20:** Which may be an independent method clause, or may comprise the method of clause 17, describes a method wherein the vehicle system is configured by an end user of the vehicle. The capturing of the one or more of the images is carried out, at least in part, by one or more vehicle cameras. The transmitting of the obtained one or more images is carried out in response to a change in at least one vehicle component or preferred user setting.

**Clause 21:** The patent application also has a clause comprising a system, which comprises means for capturing at least one or more images of a vehicle. The system also includes means for transmitting the obtained one or more images to network connected storage. The storage comprises one or more images of possible vehicle configurations. The system also includes means for comparing the obtained images with the stored images to identify a configuration status of the vehicle. The system also includes means for selecting a configuration setting for a vehicle system based on the identified configured status. The system also includes means for receiving the configuration setting. The system also includes means for implementing the received configuration setting on the vehicle system.

A number of implementations have been described. Nevertheless, it will be understood that various modifications may be made without departing from the spirit and scope of the disclosure. Accordingly, other implementations are within the scope of the following claims.

## Claims

1. A vehicle configurator system, comprising:
at least one image capturing device configured to obtain one or more images of a vehicle;
networking circuitry configured to transmit the obtained one or more images to network connected storage, the storage comprising one or more images of possible vehicle configurations;
a processor configured to compare the obtained images with the stored images to identify a configuration status of the vehicle, and select a configuration setting for a vehicle system based on the identified configured status, wherein the networking circuitry is configured to receive the configuration setting, and wherein the configuration circuitry is configured to implement the received configuration setting on the vehicle system.

2. The system of claim 1, wherein the at least one image capturing device comprises one or more cameras integrated into the vehicle.

3. The system of claims 1 or 2, wherein the at least one image capturing device comprises one or more cameras of an external environment.

4. The system of any of claims 1 to 3, wherein the at least one image capturing device is further configured to capture images in a range of lighting conditions.

5. The system of any of claims 1 to 4, wherein the network connected storage is further configured to store metadata associated with the images of possible vehicle configurations, the metadata comprising at least one of: part number, installation date, configurable options, accessory information, vehicle model, vehicle manufacture date, vehicle identification number, optional extra information, and compatibility information.

6. The system of any of claims 1 to 5, wherein the configuration circuitry is further configured to verify the successful implementation of the configuration setting and to provide a confirmation notice.

7. The system of any of claims 1 to 6, wherein the processor uses an artificial intelligence trained on possible vehicle configurations to recognize patterns and differences between the stored images and obtained images.

8. The system of any of claims 1 to 7, wherein the configuration circuitry is further configured to receive user preferences to update the configuration setting.

9. The system of any of claims 1 to 8, wherein the configuration circuitry is further configured to revert to a previous configuration in the event of an unsuccessful implementation of the received configuration setting.

10. The system of any of claims 1 to 9, wherein the networked storage is further configured to update the stored images with new vehicle configurations after they become available.

11. The system of any of claims 1 to 10, wherein the networked storage is further configured to maintain a ledger of the configuration settings of the vehicle.

12. A method for configuring a vehicle system, comprising:
capturing, using at least one image capture device, at least one or more images of a vehicle;
transmitting, using networking circuitry, the obtained one or more images to network connected storage, the storage comprising one or more images of possible vehicle configurations;
comparing, using a processor, the obtained images with the stored images to identify a configuration status of the vehicle;
selecting, using the processor, a configuration setting for a vehicle system based on the identified configured status;
receiving, at the networking circuitry, the configuration setting; and
implementing, using configuration circuitry, the received configuration setting on the vehicle system.

13. The method of claim 12, wherein the vehicle system is configured at a vehicle production line, the method comprising:
capturing the one or more of the images during assembly of the vehicle on the vehicle production line;
selecting the configuration setting in real-time during assembly of the vehicle on the vehicle production line; and
implementing the received configuration to complete assembly of the vehicle on the production line.

14. The method of claim 12, wherein the vehicle system is configured at a dealership, the method comprising:
capturing the one or more of the images using a mobile user device; and
transmitting, from the mobile device, the obtained one or more images in response to determining a change in at least one vehicle component and/or desired vehicle setting.

15. The method of claim 12, wherein the vehicle system is configured during operation by an end user, the method comprising:
capturing the one or more of the images by one or more environment image capturing devices located in an environment in which the vehicle operates; and
transmitting, from the environmental image capturing devices, the obtained one or more images in response to determining a change in at least one vehicle component and/or an updated vehicle setting.
